Europäisches Patentamt

European Patent Office

Office européen des brevets

(19)

(11) Numéro de publication : **0 147 650**
**B1**

(12) **FASCICULE DE BREVET EUROPÉEN**

(45) Date de publication du fascicule du brevet :
02.03.88

(51) Int. Cl.⁴ : **H 01 B 13/06**, H 01 B 13/00

(21) Numéro de dépôt : **84114408.2**

(22) Date de dépôt : **29.11.84**

(54) **Procédé de fabrication d'un isolant à structure cellulaire auto-réticulable.**

(30) Priorité : **05.12.83 FR 8319404**

(43) Date de publication de la demande :
**10.07.85 Bulletin 85/28**

(45) Mention de la délivrance du brevet :
**02.03.88 Bulletin 88/09**

(84) Etats contractants désignés :
**BE CH DE FR GB IT LI NL SE**

(56) Documents cités :
**FR-A- 1 574 585**
**GB-A- 1 080 619**
**GB-A- 1 136 367**
**US-A- 3 617 379**

(73) Titulaire : **LES CABLES DE LYON Société anonyme dite:**
**170 quai de Clichy**
**F-92111 Clichy Cedex (FR)**

(72) Inventeur : **Martin, Jean Marcel**
**1 rue Yves Farge**
**F-69520 Grigny (FR)**

(74) Mandataire : **Weinmiller, Jürgen**
**Lennéstrasse 9 Postfach 24**
**D-8133 Feldafing (DE)**

## Description

La présente invention concerne un procédé de fabrication d'un isolant à structure cellulaire auto-réticulable d'un câble électrique comportant au moins un conducteur nu obtenu sur une tréfileuse dans lequel :

on maintient le conducteur très chaud à la sortie de la tréfileuse,

on utilise du polyéthylène finement broyé ou obtenu à l'état de poudre, un agent d'expansion et un agent de réticulation.

On connaît notamment, par le document GB-A-1 136 367, un tel procédé de fabrication dans lequel le polyéthylène est finement broyé ou en poudre. Les exemples donnés pour le choix d'un agent d'expansion et d'un agent de réticulation ne permettent pas d'obtenir pour l'isolant de bonnes qualités mécaniques et électriques.

On connaît également par le document GB-A-1 080 619, un procédé de fabrication d'un composé cellulaire dans lequel on emploie du gypse comme agent d'expansion, mais ce document ne mentionne pas l'emploi d'un silane comme catalyseur de réticulation.

La présente invention a donc pour but d'améliorer les qualités mécaniques et électriques d'un isolant, par l'emploi simultané de gypse et d'un silane ; la décomposition du gypse, sous l'effet de la chaleur, libérant de la vapeur d'eau qui provoque l'expansion du polyéthylène et en même temps la réticulation du polyéthylène par le silane.

Le procédé de fabrication selon l'invention est caractérisé en ce que :

on greffe le polyéthylène au moyen d'un silane,

on broye finement du gypse,

on mélange le polyéthylène greffé et le gypse sans malaxage,

on introduit le mélange obtenu sur un lit fluidisé ou en suspension électrostatique, le conducteur maintenu à des températures comprises entre 200 et 350 °C, traversant le mélange obtenu, et le gypse jouant alors le rôle de l'agent d'expansion mais aussi celui du catalyseur de réticulation en présence du silane.

De préférence, on incorpore un mélange maître catalyseur de réticulation dans le polyéthylène greffé (environ 0,05 à 2 % de catalyseur pour 100 % de polyéthylène) pour accélérer fortement la vitesse de réticulation, ce catalyseur étant notamment un sel organique d'étain, et par exemple le dilaurate de dibutylétain.

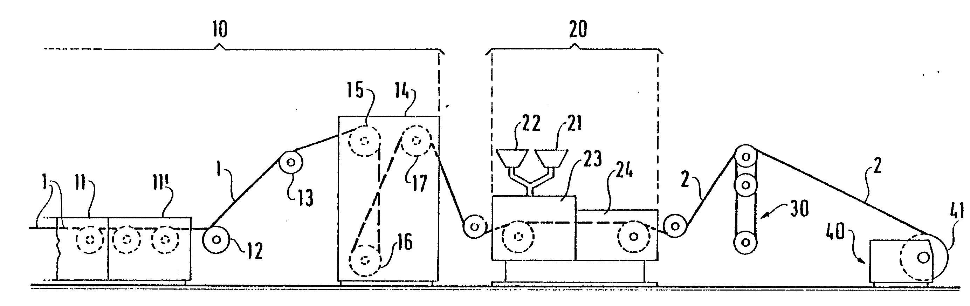

Il est décrit ci-après, à titre d'exemple et en référence à la figure unique du dessin annexé, une installation de fabrication de câbles électriques, comportant une unité d'isolation pour la mise en œuvre du procédé selon l'invention.

Dans cette figure unique, on voit une tréfileuse 10 composée de plusieurs unités de tirage, deux unités 11, 11' étant représentées, de plusieurs galets de renvoi 12, 13 et d'un recuiseur 14 comportant également des galets de renvoi 15, 16, 17. Cette tréfileuse 10 est immédiatement suivie d'une unité d'isolation 20, elle-même suivie respectivement par un pantin de régulation 30 et un enrouleur 40 entraînant une bobine de stockage 41.

L'unité d'isolation 20 se compose de deux réservoirs 21, 22, le réservoir 21 contenant du polyéthylène greffé, avec ou sans catalyseur de réticulation, finement broyé ou transformé en poudre dans un broyeur non représenté (granulométrie comprise entre 20 et 400 μm par exemple), le réservoir 22 contenant du gypse finement broyé ou transformé en poudre dans un autre broyeur non représenté (granulométrie comprise entre 2 et 20 μm par exemple). Cette unité d'isolation comprend également un lit de fluidisation 23 des poudres et un refroidisseur 24.

Une opération d'isolation se déroule de la manière suivante : Le conducteur nu 1, sortant du recuiseur 14 à l'état recuit à des températures comprises entre 200 et 350 °C, traverse le lit de fluidisation 23 et se charge du mélange de poudres de polyéthylène et de gypse (environ 2 à 10 % de gypse pour 100 % de polyéthylène) qui ont été préalablement mélangées et introduites dans le lit de fluidisation 23. Au contact du fil chaud, le mélange de poudres fond, le gypse se décompose et libère de l'eau qui crée des cellules dans le polyéthylène fondu. Le fil chargé traverse ensuite le refroidisseur 24 et l'eau ainsi libérée provoque la réaction de réticulation par hydrolyse du silane. Cette réticulation se fait très rapidement du fait de la présence d'un catalyseur de réticulation, par exemple un sel organique d'étain. Ce catalyseur n'est pas indispensable, mais sans celui-ci, le temps de réticulation serait plus long.

Le conducteur isolé 2 obtenu à la sortie de l'unité d'isolation 20 passe ensuite sur le pantin de régulation 30 et est stocké sur la bobine 41 entraînée par l'enrouleur 40.

Ce procédé de fabrication d'un isolant peut bien sûr s'appliquer à tous types de câbles électriques d'énergie basse tension ou de télécommunications, comportant un ou plusieurs conducteurs.

## Revendications

1. Procédé de fabrication d'un isolant à structure cellulaire autoréticulable d'un câble électrique comportant au moins un conducteur nu (1) obtenu sur une tréfileuse (10), dans lequel :

on maintient le conducteur (1) très chaud à la sortie de la tréfileuse,

on utilise du polyéthylène finement broyé ou obtenu à l'état de poudre, un agent d'expansion et un agent de réticulation, caractérisé en ce que :

on greffe le polyéthylène au moyen d'un silane,

on broye finement du gypse,

on mélange le polyéthylène greffé et le gypse sans malaxage,

on introduit le mélange obtenu sur un lit (23) fluidisé ou en suspension électrostatique, le conducteur maintenu à des températures comprises entre 200 et 350 °C, traversant le mélange obtenu, et le gypse jouant alors le rôle de l'agent d'expansion mais aussi celui du catalyseur de réticulation en présence du silane.

2. Procédé de fabrication selon la revendication 1, caractérisé en ce que l'on incorpore un mélange maître catalyseur de réticulation dans le polyéthylène greffé pour accélérer fortement la vitesse de réticulation, ce catalyseur étant notamment un sel organique d'étain.

## Claims

1. A method of manufacturing an insulant having a self reticulating structure for an electrical cable including at least one bare conductor (1) obtained from a wire-drawing machine (10) in which :

the conductor is maintained very hot at the outlet of the wire-drawing machine, and

one uses polyethylene finely crushed or obtained in the form of a powder, an expansion agent and a reticulating agent, characterized in that :

polyethylene is grafted through the intermediary of a silane

the grafted polyethylene is mixed with gypsum without kneading

the resulting mixture is introduced into a fluidized bed or in an electrostatic suspension, the conductor is maintained at temperatures in the range of 200 °C to 350 °C and passed through the resulting mixture, and the gypsum acts as an expansion agent, and also as a catalyst for the reticulation in the presence of silane.

2. A method according to claim 1, characterized in that, a mixture of a master catalyst for reticulating is incorporated in the grafted polyethylene in order to greatly accelerate the speed of reticulation, the catalyst being an organic tin compound.

## Patentansprüche

1. Verfahren zur Herstellung einer selbstvernetzenden Isolierung mit Zellstruktur für ein elektrisches Kabel mit mindestens einem aus einer Drahtziehmaschine (10) kommenden nackten Leiter (1), wobei der Leiter am Austritt der Maschine sehr heiß gehalten und fein zerkleinertes oder als Pulver gewonnenes Polyäthylen, ein Expansionsmittel und ein Vernetzungsmittel benutzt werden, dadurch gekennzeichnet, daß :

das Polyäthylen mit einem Silan gepfropft wird Gips fein zerkleinert wird

das gepfropfte Polyäthylen mit dem Gips ohne Knetung vermischt wird

das erhaltene Gemisch in ein Wirbelschichtbett oder eine elektrostatische Suspension geleitet wird, wobei der Leiter, auf Temperaturen zwischen 200 und 350 °C gehalten, das erhaltene Gemisch passiert und der Gips als Expansionsmittel, aber auch als Vernetzungskatalysator im Beisein des Silans wirkt.

2. Verfahren nach Anspruch 1, dadurch gekennzeichnet, daß man eine Mischung eines Meistervernetzungskatalysators in das gepfropfte Polyäthylen einbringt, um die Vernetzungsgeschwindigkeit stark zu erhöhen, wobei der Katalysator vorzugsweise ein organisches Zinnsalz ist.